(19) Europäisches Patentamt
European Patent Office
Office européen des brevets

(11) **EP 3 112 739 A1**

(12) **EUROPEAN PATENT APPLICATION**
published in accordance with Art. 153(4) EPC

(43) Date of publication:
**04.01.2017 Bulletin 2017/01**

(21) Application number: **15755553.3**

(22) Date of filing: **27.02.2015**

(51) Int Cl.:
*F16L 59/147* (2006.01)  *C08G 18/00* (2006.01)
*C08G 18/16* (2006.01)  *C09K 21/02* (2006.01)
*C09K 21/04* (2006.01)  *C09K 21/08* (2006.01)
*C09K 21/12* (2006.01)  *F16L 11/12* (2006.01)
*C08G 101/00* (2006.01)

(86) International application number:
**PCT/JP2015/055766**

(87) International publication number:
**WO 2015/129844 (03.09.2015 Gazette 2015/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.02.2014 JP 2014036905**

(71) Applicant: **Sekisui Chemical Co., Ltd.
Osaka-shi, Osaka 530-8565 (JP)**

(72) Inventors:
• **OKADA, Kazuhiro
Hasuda-shi
Saitama 349-0198 (JP)**

• **OKADA, Yousuke
Hasuda-shi
Saitama 349-0198 (JP)**
• **USHIMI, Takehiko
Hasuda-shi
Saitama 349-0198 (JP)**

(74) Representative: **Ter Meer Steinmeister & Partner
Patentanwälte mbB
Nymphenburger Straße 4
80335 München (DE)**

(54) **FIRE-RESISTANT HEAT-INSULATING COATING MATERIAL FOR PIPING OR EQUIPMENT**

(57)     The fire-resistant heat-insulating coating material (3) for a pipe (2) comprises a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

Fig. 1

EP 3 112 739 A1

**Description**

Technical Field

Cross Reference of Related Field

This application claims priority to JP2014-036905A, filed February 27, 2014, the disclosure of which is incorporated herein by reference in its entirety.

Technical Field

The present invention relates to a fire-resistant heat-insulating coating material for a pipe or device, a pipe or device coated with this coating material, and an application method of this coating material.

Background Art

Various applications have previously been made to improve the heat-insulating properties and fire resistance of a pipe, device, etc., of general buildings. For example, Patent Literature (PTL) 1 discloses a fire-resistant heat-insulating material for a pipe, characterized in that the outer circumference of the pipe is coated with a laminate of a foamed body layer and a fire-resistant layer comprising a thermally expandable insulating material. Patent Literature (PTL) 2 discloses a fire-resistant refrigeration apparatus for a low-temperature fluid pipe or device. The apparatus of PTL 2 is characterized by being composed of four layers: a heat-insulating material that comprises an organic foamed resin and that covers the exterior of a pipe or device; a fire-resistant material that comprises aluminum hydroxide as a main component and is obtained by foam molding the aluminum hydroxide, together with an organic resin and a foaming agent, and that covers the external side of the heat-insulating material; a waterproof and moisture-proof material that covers the external side of the fire-resistant material; and a metal exterior material that covers the external side of the waterproof and moisture-proof material.

Patent Literature (PTL) 3 discloses a method for producing a urethane slab foam having low heat conductivity and excellent flame retardancy. This urethane slab foam does not generate scorch inside. PTL 4 discloses a method for producing an urethane slab foam having the characteristics disclosed in PTL 3 and further having dimensional stability.

Citation List

Patent Literature

PTL 1: JPH11-201374A
PTL 2: JPH06-032899U
PTL 3: JP4457305B
PTL 4: JP2008-074880A

Summary of Invention

Technical Problem

In PTL 1, however, the fire-resistant layer and the foamed body layer must be separately applied to a pipe to impart heat-retaining properties and fire safety. In PTL 2 as well, the heat-insulating material and the fire-resistant material are separate layers. In PTL 2, a metal exterior material for preventing dew condensation and water absorption is also additionally provided.

Although PTL 3 and 4 work on the elimination of internal scorch, these documents do not focus on the improvement in fire-resistant performance.

An object of the present invention is to provide a fire-resistant heat-insulating coating material for a pipe or device, the coating material comprising a foamed polyurethane heat-insulating layer having excellent fire resistance.

Solution to Problem

The present inventors found that the application of a foamed polyurethane heat-insulating layer comprising a flame-retardant urethane composition containing a polyisocyanate, a polyol, a trimerization catalyst, a foaming agent, a foam stabilizer, and additives to a pipe or device imparts both heat-insulating properties and fire resistance to the pipe or device. The present invention has thus been completed.

More specifically, the following describes the present invention:

Item 1. A fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

Item 2. The fire-resistant heat-insulating coating material for a pipe or device according to Item 1, wherein the flame-retardant urethane composition contains, based on 100 parts by weight of the polyurethane resin composition comprising the polyisocyanate and the polyol, the trimerization catalyst in an amount within a range of 0.1 to 10 parts by weight, the foaming agent in an amount within a range of 0.1 to 30 parts by weight, the foam stabilizer in an amount within a range of 0.1 to 10 parts by weight, and the additives in an amount within a range of 4.5 to 70 parts by weight, and wherein the additives comprise red phosphorus in an amount within a range of 3 to 18 parts by weight and at least one additive other than red phosphorus in an amount within a range of 1.5 to 52 parts by weight.

Item 3. A pipe or device coated with the fire-resistant heat-insulating coating material for a pipe or device of Item 1 or 2.

Item 4. A method for applying a fire-resistant heat-insulating coating material for a pipe or device, the method comprising coating the outer circumference of a pipe or device with a fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

Advantageous Effects of Invention

According to the present invention, the application of a foamed polyurethane heat-insulating layer having excellent fire resistance imparts excellent heat-insulating properties and fire resistance to a pipe or device.

Brief Description of Drawings

Fig. 1 shows a schematic cross-sectional diagram illustrating an example of a pipe structure to which the fire-resistant heat-insulating coating material for a pipe or device of the present invention is applied.
Fig. 2 shows a schematic cross-sectional diagram illustrating another example of a pipe structure.

Description of Embodiments

As used in the specification, the singular forms ("a," "an," and "the") include the plural unless otherwise specified separately, or unless the context clearly dictates otherwise.

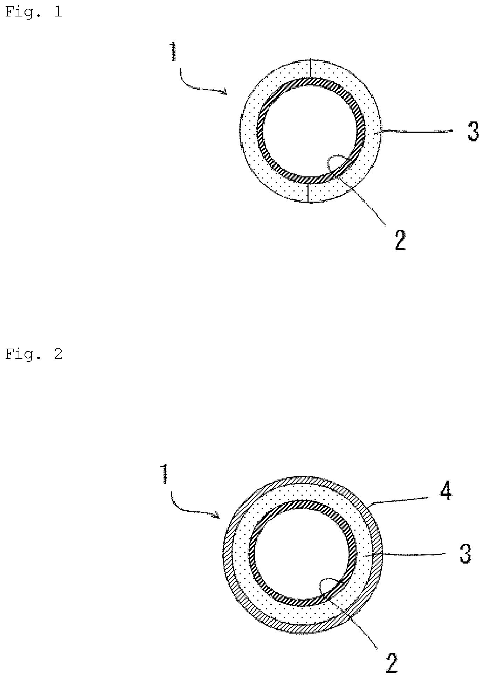

Fig. 1 shows a schematic cross-sectional diagram illustrating an example of a pipe structure to which the fire-resistant heat-insulating coating material for a pipe or device of the present invention is applied. The pipe structure 1 includes a hollow, generally cylindrical pipe 2, and on the pipe 2, a fire-resistant heat-insulating coating material 3, which is applied to the entire outer circumference of the pipe 2.
The pipe 2 may be formed from any materials, such as metals and resins.
The fire-resistant heat-insulating coating material 3 is a layer that imparts fire resistance and heat-insulating properties to the pipe 2, and is a foamed polyurethane heat-insulating layer comprising a flame-retardant urethane composition containing a polyisocyanate, a polyol, a trimerization catalyst, a foaming agent, a foam stabilizer, and additives. The following describes each component of the flame-retardant urethane composition in detail.
The fire-resistant heat-insulating coating material 3 has a thickness of usually 0.2 to 300 mm, and preferably 10 to 150 mm. A thickness of 0.2 mm or less cannot achieve sufficient fire resistance or fire safety, while a thickness exceeding 300 mm increases the weight, making the material difficult to handle.

The fire-resistant heat-insulating coating material 3 may be applied to the pipe 2 by using a previously known method, such as by atomizing, coating (including brush coating), printing, or spraying (including spraying using a spray can or spraying apparatus, such as a spray gun) the flame-retardant urethane composition constituting the fire-resistant heat-insulating coating material 3, or by immersing the pipe 2 in the flame-retardant urethane composition. Alternatively, the fire-resistant heat-insulating coating material 3 may be directly applied to the pipe 2 by extrusion molding of the flame-retardant urethane resin composition on the pipe 2. It is also possible to place the flame-retardant urethane resin composition into a container, such as a mold or frame, to obtain a fire-resistant heat-insulating coating material 3 in a sheet form in advance, followed by winding the obtained coating material sheet around the outer circumference of the pipe 2. In Fig. 3, the pipe 2 is provided with two semi-circular members, i.e., the fire-resistant heat-insulating coating material 3, that have been produced in advance to fit the outer pipe diameter.

The following describes the flame-retardant urethane composition constituting the fire-resistant heat-insulating coating material 3. The flame-retardant urethane composition contains a polyisocyanate, a polyol, a trimerization catalyst, a foaming agent, a foam stabilizer, and additives.

Polyisocyanate

Examples of the polyisocyanate as the main component of urethane resin include aromatic polyisocyanates, alicyclic polyisocyanates, aliphatic polyisocyanates, and the like.

Examples of aromatic polyisocyanates include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, polymethylene polyphenyl polyisocyanate, and the like.

Examples of alicyclic polyisocyanates include cyclohexylene diisocyanate, methylcyclohexylene diisocyanate, isophorone diisocyanate, dicyclohexylmethane diisocyanate, dimethyldicyclohexylmethane diisocyanate, and the like.

Examples of aliphatic polyisocyanates include methylene diisocyanate, ethylene diisocyanate, propylene diisocyanate, tetramethylene diisocyanate, hexamethylene diisocyanate, and the like.

The polyisocyanates may be used alone or in a combination of two or more. The main component of urethane resin is preferably polymethylene polyphenyl polyisocyanate because it is, for example, easy to use and readily available.

Polyol

Examples of the polyol as a curing agent for urethane resin, include polylactone polyols, polycarbonate polyols, aromatic polyols, alicyclic polyols, aliphatic polyols, polyester polyols, polymeric polyols, polyether polyols, and the like.

Examples of polylactone polyols include polypropiolactone glycol, polycaprolactone glycol, polyvalerolactone glycol, and the like.

Examples of polycarbonate polyols include polyols obtained by dealcoholization reaction of hydroxyl-containing compounds, such as ethylene glycol, propylene glycol, butanediol, pentanediol, hexanediol, octanediol, and nonanediol, with diethylene carbonate, dipropylene carbonate, and the like.

Examples of aromatic polyols include bisphenol A, bisphenol F, phenol novolac, cresol novolac, and the like.

Examples of alicyclic polyols include cyclohexane diol, methylcyclohexane diol, isophorone diol, dicyclohexylmethane diol, dimethyldicyclohexylmethane diol, and the like.

Examples of aliphatic polyols include ethylene glycol, propylene glycol, butanediol, pentanediol, hexanediol, and the like.

Examples of polyester polyols include polymers obtained by dehydration condensation of polybasic acids with polyhydric alcohols; polymers obtained by ring-opening polymerization of a lactone, such as ε-caprolactone or ε-methyl-ε-caprolactone; and condensation products of hydroxy carboxylic acids with the polyhydric alcohols mentioned above and the like.

Specific examples of polybasic acids as used herein include adipic acid, azelaic acid, sebacic acid, terephthalic acid, isophthalic acid, succinic acid, and the like. Specific examples of polyhydric alcohols include bisphenol A, ethylene glycol, 1,2-propylene glycol, 1,4-butanediol, diethylene glycol, 1,6-hexane glycol, neopentyl glycol, and the like.

Specific examples of hydroxy carboxylic acids include castor oil; reaction products of castor oil with ethylene glycol; and the like.

Examples of polymeric polyols include polymers obtained by graft polymerization of aromatic polyols, alicyclic polyols, aliphatic polyols, and polyester polyols with ethylenically unsaturated compounds, such as acrylonitrile, styrene, methyl acrylate, and methacrylate; polybutadiene polyol; modified polyols of polyhydric alcohols; hydrogenated products thereof; and the like.

Examples of modified polyols of polyhydric alcohols include, for example, those obtained by modifying a polyhydric alcohol used as a starting material by reacting it with an alkylene oxide.

Examples of polyhydric alcohols include trihydric alcohols, such as glycerin and trimethylolpropane; tetra- to octahydric alcohols, such as pentaerythritol, sorbitol, mannitol, sorbitan, diglycerol, dipentaerythritol and the like, cane sugar, glucose, mannose, fructose, methyl glucoside, and derivatives thereof; phenols such as phenol, phloroglucin, cresol, pyrogallol, catechol, hydroquinone, bisphenol A, bisphenol F, bisphenol S, 1-hydroxynaphthalene, 1,3,6,8-tetrahydroxynaphthalene, anthrol, 1,4,5,8-tetrahydroxyanthracene, and 1-hydroxypyrene; polybutadiene polyols; castor oil polyols; multi-functional polyols (e.g., 2 to 100 functional groups), such as (co)polymers of hydroxyalkyl(meth)acrylate and polyvinyl alcohols; and condensation products (novolak) of phenol with formaldehyde.

The method for modifying a polyhydric alcohol is not particularly limited. A method of adding alkylene oxide ("AO") to a polyhydric alcohol is preferably used.

Examples of AO include AO having 2 to 6 carbon atoms, such as ethylene oxide ("EO"), 1,2-propylene oxide ("PO"), 1,3-propylene oxide, 1,2-butylene oxide, and 1,4-butylene oxide. Of these, PO, EO, and 1,2-butylene oxide are preferable, and PO and EO are more preferable, from the viewpoint of their characteristics and reactivity. When two or more types of AOs (e.g., PO and EO) are used, they may be added in the block and/or random polymer form.

Examples of polyether polyols include polymers obtained by subjecting at least one member of alkylene oxides, such as ethylene oxide, propylene oxide, tetrahydrofuran, to ring-opening polymerization in the presence of at least one member of, for example, low-molecular-weight active hydrogen compounds having two or more active hydrogen atoms.

Examples of low-molecular-weight active hydrogen compounds having two or more active hydrogen atoms include diols, such as bisphenol A, ethylene glycol, propylene glycol, butylene glycol, and 1,6-hexanediol; triols, such as glycerin and trimethylolpropane; amines, such as ethylenediamine and butylenediamine; and the like.

The polyol used in the present invention is preferably a polyester polyol or a polyether polyol because they greatly contribute to reduce the gross calorific value at the time of combustion.

Of these, it is more preferable to use a polyester polyol having a molecular weight of 200 to 800, and it is still more preferable to use a polyester polyol having a molecular weight of 300 to 500.

An isocyanate index is the percentage of the equivalent ratio of isocyanate groups of polyisocyanate to polyol hydroxyl groups. The value exceeding 100 indicates that the amount of isocyanate groups is greater than the amount of hydroxyl groups.

The isocyanate index is calculated using the following equations. OHV refers to a hydroxyl value.

```
Isocyanate index = (the number of parts of isocyanate added/NCO
equivalents)/(the number of equivalents of polyol + the number of
equivalents of water) x 100


  NCO equivalent = Chemical formula weight of NCO/NCO% x 100


 Number of equivalents of polyol = (the number of parts of polyol
 added x average OHV)/(chemical formula weight of KOH) x 1000

 Number of equivalents of water = the number of parts of water
 added per 100 of resin in total/(chemical formula weight of H₂O/2)
```

The isocyanate index of the urethane resin used in the present invention is preferably in the range of 120 to 1000, more preferably 200 to 800, and still more preferably 300 to 600.

Trimerization Catalyst

A trimerization catalyst reacts with isocyanate groups of polyisocyanate, i.e., the main component of polyurethane resin, to achieve trimerization of the isocyanates, leading to the formation of isocyanurate rings.

Examples of trimerization catalysts used to facilitate the formation of isocyanurate rings include nitrogen-containing aromatic compounds, such as tris(dimethylaminomethyl)phenol, 2,4-bis(dimethylaminomethyl)phenol, and 2,4,6-tris(dialkylaminoalkyl)hexahydro-S-triazine;
carboxylic acid alkali metal salts, such as potassium acetate and potassium octylate;

tertiary ammonium salts, such as trimethyl ammonium salt, triethyl ammonium salt, and triphenyl ammonium salt; quaternary ammonium salts, such as tetramethyl ammonium salt, tetraethyl ammonium salt, and tetraphenyl ammonium salt; and the like.

The amount of the trimerization catalyst used in the flame-retardant urethane composition is preferably within a range of 0.1 to 10 parts by weight, more preferably 0.6 to 8 parts by weight, still more preferably 0.6 to 6 parts by weight, and most preferably 0.6 to 3.0 parts by weight, based on 100 parts by weight of the urethane resin. An amount of 0.6 parts by weight or more eliminates a failure of hindering the isocyanate trimerization, while an amount of 10 parts by weight or less maintains an appropriate foaming rate, enabling easy handling.

Foaming Agent

The foaming agent used in the flame-retardant urethane composition promotes the foaming of urethane resin.

Specific examples of foaming agents include:

water;

low-boiling hydrocarbons, such as propane, butane, pentane, hexane, heptane, cyclopropane, cyclobutane, cyclopentane, cyclohexane, and cycloheptane;

chlorinated aliphatic hydrocarbon compounds, such as dichloroethane, propylchloride, isopropylchloride, butylchloride, isobutylchloride, pentylchloride, and isopentylchloride;

fluorine compounds, such as trichloromonofluoromethane, trichlorotrifluoroethane, $CHF_3$, $CH_2F_2$, $CH_3F$, and hydrofluoroolefin

(HFO), e.g., trans-1-chloro-3,3,3-trifluoropropene; hydrochlorofluorocarbon compounds, such as dichloromonofluoroethane (e.g., HCFC141b (1,1-dichloro-1-fluoroethane)), HCFC22 (chlorodifluoromethane), and HCFC142b (1-chloro-1,1-difluoroethane);

hydrochlorofluorocarbon compounds, such as HFC-245fa (1,1,1,3,3-pentafluoropropane) and HFC-365mfc (1,1,1,3,3-pentafluorobutane); ether compounds, such as diisopropyl ether;

organic physical foaming agents, such as mixtures of these compounds;

inorganic physical foaming agents, such as nitrogen gas, oxygen gas, argon gas, and carbon dioxide gas;

and the like.

The amount of the foaming agent is preferably within a range of 0.1 to 30 parts by weight, based on 100 parts by weight of the urethane resin. The amount of the foaming agent is more preferably within a range of 0.1 to 18 parts by weight, still more preferably 0.5 to 18 parts by weight, and most preferably 1 to 15 parts by weight, based on 100 parts by weight of the urethane resin.

When the range of the foaming agent is 0.1 parts by weight or more, the foaming is promoted, which reduces the density of the obtained molded product. When the range is 30 parts by weight or less, a failure in the formation of foam is avoided.

Foam Stabilizer

Examples of foam stabilizers include surfactants, such as polyoxyalkylene foam stabilizers such as polyoxyalkylene alkyl ether, and silicone foam stabilizers such as organopolysiloxane.

The amount of the foam stabilizer used for the urethane resin, which is cured by a chemical reaction, is suitably set according to the urethane resin used. As one example, the range is preferably, for example, 0.1 to 10 parts by weight, based on 100 parts by weight of the urethane resin.

The trimerization catalysts, foaming agents, and foam stabilizers may each be used alone or in a combination of two or more.

Additives

The additives comprise red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

In this case, examples of preferable combinations of usable additives include the following (a) to (n).

(a) Red phosphorus and a phosphoric acid ester
(b) Red phosphorus and a phosphate-containing flame retardant
(c) Red phosphorus and a bromine-containing flame retardant

(d) Red phosphorus and a boron-containing flame retardant

(e) Red phosphorus and an antimony-containing flame retardant

(f) Red phosphorus and a metal hydroxide

(g) Red phosphorus and a needle-shaped filler

(h) Red phosphorus, a phosphoric acid ester, and a phosphate-containing flame retardant

(i) Red phosphorus, a phosphoric acid ester, and a bromine-containing flame retardant

(j) Red phosphorus, a phosphoric acid ester, and a boron-containing flame retardant

(k) Red phosphorus, a phosphoric acid ester, and a needle-shaped filler

(l) Red phosphorus, a phosphate-containing flame retardant, and a bromine-containing flame retardant

(m) Red phosphorus, a phosphate-containing flame retardant, and a boron-containing flame retardant

(n) Red phosphorus, a bromine-containing flame retardant, and a boron-containing flame retardant

(n) Red phosphorus, a bromine-containing flame retardant, and a boron-containing flame retardant

(o) Red phosphorus, a phosphoric acid ester, a phosphate-containing flame retardant, and a bromine-containing flame retardant

(p) Red phosphorus, a phosphoric acid ester, a phosphate-containing flame retardant, a bromine-containing flame retardant, and a boron-containing flame retardant

(q) (1) - (p) to which a needle-shaped filler is further added

(r) Red phosphorus; a phosphoric acid ester and a phosphate-containing flame retardant; and at least one member selected from borate-containing flame retardants, antimony-containing flame retardants, metal hydroxides, and needle-shaped fillers

(s) Red phosphorus; one or two members selected from phosphoric acid esters, phosphate-containing flame retardants, and bromine-containing flame retardants; at least one member selected from borate-containing flame retardants, antimony-containing flame retardants, metal hydroxides, and needle-shaped fillers

(t) Red phosphorus; phosphoric acid ester, phosphate-containing flame retardants, and bromine-containing flame retardants; at least one member selected from borate-containing flame retardants, antimony-containing flame retardants, metal hydroxides, and needle-shaped fillers

There is no limitation to red phosphorus used in the present invention, and a commercially available product may be suitably selected for use.

The amount of the red phosphorus used in the flame-retardant urethane composition is preferably within a range of 3.0 to 18 parts by weight, based on 100 parts by weight of the urethane resin.

The range of red phosphorus of 3.0 parts by weight or more maintains the self-extinguishing property of the flame-retardant urethane resin composition, while the range of 18 parts by weight or less does not prevent the foaming of the flame-retardant urethane resin composition.

The phosphoric acid ester used in the present invention is not particularly limited. It is preferable to use a monophosphoric acid ester, a condensed phosphoric acid ester, and the like.

Examples of monophosphoric acid esters include, but are not particularly limited to, trimethyl phosphate, triethyl phosphate, tributyl phosphate, tri(2-ethylhexyl)phosphate, tributoxyethyl phosphate, triphenyl phosphate, tricresyl phosphate, trixylenyl phosphate, tris(isopropylphenyl)phosphate, tris(phenylphenyl)phosphate, trinaphthyl phosphate, cresyl diphenyl phosphate, xylenyl diphenyl phosphate, diphenyl(2-ethylhexyl)phosphate, di(isopropylphenyl)phenyl phosphate, monoisodecyl phosphate, 2-acryloyloxyethyl acid phosphate, 2-methacryloyloxyethyl acid phosphate, diphenyl-2-acryloyloxyethyl phosphate, diphenyl-2-methacryloyloxyethyl phosphate, melamine phosphate, dimelamine phosphate, melamine pyrophosphate, triphenylphosphine oxide, tricresylphosphine oxide, diphenyl methanephosphonate, diethyl phenylphosphonate, resorcinol bis(diphenyl phosphate), bisphenol A bis(diphenyl phosphate), phospha phenanthrene, tris($\beta$-chloropropyl)phosphate, and the like.

Examples of condensed phosphoric acid esters include, but are not particularly limited to, trialkyl polyphosphate, resorcinol polyphenyl phosphate, resorcinol poly(di-2,6-xylyl)phosphate (produced by Daihachi Chemical Industry Co., Ltd., trade name: PX-200), hydroquinone poly(2,6-xylyl)phosphate, condensation products thereof, and like condensed phosphoric acid esters.

Examples of commercially available condensed phosphoric acid esters include resorcinol polyphenyl phosphate (trade name: CR-733S), bisphenol A polycresyl phosphate (trade name: CR-741), aromatic condensed phosphoric acid ester (trade name: CR747), resorcinol polyphenyl phosphate (produced by Adeka Co. Ltd., trade name: ADK Stab PFR), bisphenol A polycresyl phosphate (trade name: FP-600, FP-700), and the like.

Of the above, it is preferable to use a monophosphoric acid ester, and it is more preferable to use tris($\beta$-chloropropyl) phosphate, because they reduce the viscosity of the composition before being cured, as well as initial calorific value, in a highly sufficient manner.

The phosphoric acid esters may be used alone or in a combination of two or more.

The amount of phosphoric acid ester used is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of phosphoric acid ester of 1.5 parts by weight or more prevents the breakage of dense residues that are formed when a molded product produced using the flame-retardant urethane resin composition is heated with fire. The range of 52 parts by weight or less does not hinder the foaming of flame-retardant urethane resin composition.

The phosphate-containing flame retardant used in the present invention contains a phosphoric acid. Examples of the phosphoric acid used in the phosphate-containing flame retardant include, but are not particularly limited to, various phosphoric acids, such as monophosphoric acid, pyrophosphoric acid, polyphosphoric acid, and combinations thereof.

Examples of phosphate-containing flame retardants include phosphates that are salts from various phosphoric acids with at least one metal or compound selected from metals belonging to Groups IA to IVB in the periodic table, ammonia, aliphatic amines, and aromatic amines. Examples of metals belonging to Groups IA to IVB in the periodic table include lithium, sodium, calcium, barium, iron (II), iron (III), aluminum, and the like.

Examples of aliphatic amines include methylamine, ethylamine, diethylamine, triethylamine, ethylenediamine, piperazine, and the like.

Examples of aromatic amines include pyridine, triazine, melamine, ammonium, and the like.

To improve the water resistance, the phosphate-containing flame retardant may be subjected to silane coupling agent treatment, covering with a melamine resin, or other known treatment. It is also possible to add a known foaming auxiliary agent, such as melamine or pentaerythritol.

Specific examples of phosphate-containing flame retardants include monophosphates, pyrophosphates, polyphosphates, and the like.

Examples of monophosphates include, but are not particularly limited to, ammonium salts, such as ammonium phosphate, ammonium dihydrogen phosphate, and diammonium hydrogen phosphate; sodium salts, such as monosodium phosphate, disodium phosphate, trisodium phosphate, monosodium phosphite, disodium phosphite, sodium hypophosphite; potassium salts, such as monopotassium phosphate, dipotassium phosphate, tripotassium phosphate, monopotassium phosphite, dipotassium phosphite, and potassium hypophosphorous; lithium salts, such as monolithium phosphate, dilithium phosphate, trilithium phosphate, monolithium phosphite, dilithium phosphite, and lithium hypophosphite; barium salts, such as barium dihydrogen phosphate, barium hydrogen phosphate, tribarium phosphate, and barium hypophosphite; magnesium salts, such as magnesium monohydrogen phosphate, magnesium hydrogen phosphate, trimagnesium phosphate, and magnesium hypophosphite; calcium salts, such as calcium dihydrogen phosphate, calcium hydrogen phosphate, tricalcium phosphate, and calcium hypophosphite; zinc salts, such as zinc phosphate, zinc phosphite, and zinc hypophosphite; and the like.

Examples of polyphosphates include, but are not particularly limited to, ammonium polyphosphate, piperazine polyphosphate, melamine polyphosphate, ammonium polyphosphate amide, aluminum polyphosphate, and the like.

Of these, it is preferable to use monophosphate, and it is more preferable to use ammonium dihydrogen phosphate, to improve the self-extinguishing property of the phosphate-containing flame retardant.

The phosphate-containing flame retardants may be used alone or in a combination of two or more.

The amount of the phosphate-containing flame retardant used in the present invention is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of phosphate-containing flame retardant of 1.5 parts by weight or more maintains the self-extinguishing property of the flame-retardant urethane resin composition, while the range of 52 parts by weight or less does not inhibit the foaming of the flame-retardant urethane resin composition.

The bromine-containing flame retardant used in the present invention is not particularly limited, as long as it is a compound containing bromine in the molecular structure. Examples thereof include aromatic brominated compounds and the like.

Specific examples of aromatic brominated compounds include monomeric organic bromine compounds, such as hexabromobenzene, pentabromotoluene, hexabromobiphenyl, decabromobiphenyl, hexabromocyclodecane, decabromodiphenyl ether, octabromodiphenyl ether, hexabromodiphenyl ether, bis(pentabromophenoxy)ethane, ethylenebis(tetrabromophthalimide), and tetrabromobisphenol A; brominated polycarbonates, such as polycarbonate oligomers produced by using brominated bisphenol A as a starting material, and copolymers of a polycarbonate oligomer with bisphenol A; brominated epoxy compounds, such as diepoxy compounds produced by a reaction between brominated bisphenol A and epichlorohydrin, and monoepoxy compounds obtained by a reaction between brominated phenols and epichlorohydrin; poly(brominated benzyl acrylate); brominated polyphenylene ether; condensation products of brominated bisphenol A, cyanuric chloride, and a brominated phenol; brominated polystyrenes, such as brominated(polystyrene), poly(brominated styrene), and crosslinked brominated polystyrene; and halogenated bromine compound polymers, such as crosslinked or non-crosslinked brominated poly(-methylstyrene).

It is preferable to use brominated polystyrene, hexabromobenzene, and the like, and it is more preferable to use hexabromobenzene, to control the calorific value at the initial stage of combustion.

The bromine-containing flame retardants may be used alone or in a combination of two or more.

The amount of the bromine-containing flame retardant used in the present invention is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of the bromine-containing flame retardant of 0.1 parts by weight or more maintains the self-extinguishing property of the flame-retardant urethane resin composition, while the range of 52 parts by weight or less does not inhibit the foaming of flame-retardant urethane resin composition.

Examples of the boron-containing flame retardants used in the present invention include borax, boron oxides, boric acids, borates, and the like.

Examples of boron oxides include diboron trioxide, boron trioxide, diboron dioxide, tetraboron trioxide, tetraboron pentoxide, and the like.

Examples of borates include borates of alkali metals, alkaline earth metals, elements in Groups 4, 12, and 13 on the Periodic Table, ammonium, and the like.

Specific examples include alkali metal salt borates, such as lithium borate, sodium borate, potassium borate, and cesium borate; alkaline earth metal salt borates, such as magnesium borate, calcium borate, and barium borate; zirconium borate; zinc borate; aluminum borate; ammonium borate; and the like.

The boron-containing flame retardant used in the present invention, is preferably a borate, and more preferably zinc borate.

The boron-containing flame retardants may be used alone or in a combination of two or more. The amount of the boron-containing flame retardant used in the present invention is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of the boron-containing flame retardant of 1.5 parts by weight or more maintains the self-extinguishing property of flame-retardant urethane resin composition, while the range of 52 parts by weight or less does not inhibit the foaming of the flame-retardant urethane resin composition.

Examples of the antimony-containing flame retardants used in the present invention include antimony oxides, antimonates, pyroantimonates, and the like.

Examples of antimony oxides include antimony trioxide, antimony pentoxide, and the like.

Examples of antimonates include sodium antimonate, potassium antimonate, and the like.

Examples of pyroantimonates include sodium pyroantimonate, potassium pyroantimonate, and the like.

The antimony-containing flame retardant used in the present invention is preferably an antimony oxide.

The antimony-containing flame retardants may be used alone or in a combination of two or more.

The amount of the antimony-containing flame retardant is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of the antimony-containing flame retardant of 1.5 parts by weight or more maintains the self-extinguishing property of the flame-retardant urethane resin composition, while the range of 52 parts by weight or less does not inhibit the foaming of flame-retardant urethane resin composition.

Examples of metal hydroxides used in the present invention include magnesium hydroxide, calcium hydroxide, aluminum hydroxide, iron hydroxide, nickel hydroxide, zirconium hydroxide, titanium hydroxide, zinc hydroxide, copper hydroxide, vanadium hydroxide, tin hydroxide, and the like.

The metal hydroxides may be used alone or in a combination of two or more.

The amount of the metal hydroxide used is preferably within a range of 1.5 to 52 parts by weight, more preferably 1.5 to 20 parts by weight, still more preferably 2.0 to 15 parts by weight, and most preferably 2.0 to 10 parts by weight, based on 100 parts by weight of the urethane resin.

The range of the metal hydroxide of 1.5 parts by weight or more maintains the self-extinguishing property of the flame-retardant urethane resin composition, while the range of 52 parts by weight or less does not inhibit the foaming of the flame-retardant urethane resin composition.

Examples of the needle-shaped fillers used in the present invention include potassium titanate whisker, aluminum borate whisker, magnesium-containing whisker, silicon-containing whisker, wollastonite, sepiolite, zonolite, ellestadite, boehmite, cylindrical hydroxyapatite, glass fibers, asbestos fibers, carbon fibers, graphite fibers, metal fibers, slag fibers, gypsum fibers, silica fibers, alumina fibers, silica-alumina fibers, zirconia fibers, boron nitride fibers, boron fibers, stainless steel fibers, and the like.

The aspect ratio (length/diameter) of the needle-shaped filler used in the present invention is preferably within a range of 5 to 50, and more preferably 10 to 40.

The needle-shaped fillers may be used alone or in a combination of two or more.

The amount of the needle-shaped filler used in the present invention is not particularly limited. It is preferably within a range of 3.0 to 30 parts by weight, more preferably 3.0 to 20 parts by weight, still more preferably 3.0 to 18 parts by weight, and most preferably 6.0 to 18 parts by weight, based on 100 parts by weight of the urethane resin.

The range of the needle-shaped filler of 3.0 parts by weight or more maintains the shape of the flame-retardant heat-insulating material composition of the present invention after combustion, while the range of 30 parts by weight or less does not inhibit the foaming of the flame-retardant heat-insulating material composition of the present invention.

The amount of the additives used in the present invention is preferably within a range of 4.5 to 70 parts by weight, more preferably 4.5 to 40 parts by weight, still more preferably 4.5 to 30 parts by weight, and most preferably 4.5 to 20 parts by weight, based on 100 parts by weight of the urethane resin.

The range of the additives of 4.5 parts by weight or more prevents the breakage of dense residues formed when a molded product produced using the flame-retardant urethane resin composition is heated with fire. The range of 70 parts by weight or less does not inhibit the foaming of flame-retardant urethane resin composition.

In a preferable embodiment, the flame-retardant urethane composition contains a trimerization catalyst within a range of 0.6 to 100 parts by weight, a foaming agent within a range of 0.1 to 30 parts by weight, additives within a range of 4.5 to 70 parts by weight, red phosphorus within a range of 3 to 18 parts by weight, at least one additive other than red phosphorus within a range of 1.5 to 52 parts by weight, based on 100 parts by weight of the polyurethane resin composition comprising a polyisocyanate and a polyol.

Other Components

The flame-retardant urethane composition may further contain a catalyst other than the trimerization catalyst mentioned above. Examples of such catalysts include nitrogen-containing catalysts, such as triethylamine, N-methylmorpholine bis(2-dimethylaminoethyl)ether, N,N,N',N",N"-pentamethyldiethylenetriamine, N,N,N'-trimethylaminoethyl-ethanolamine, bis(2-dimethylaminoethyl)ether, N-methyl, N'-dimethylaminoethyl piperazine, imidazole compounds in which a secondary amine functional group in the imidazole ring is replaced with a cyanoethyl group; and the like.

The amount of the catalysts, as a total amount of the trimerization catalyst and a catalyst other than the trimerization catalyst, is preferably within a range of 0.6 to 10 parts by weight, more preferably 0.6 to 8 parts by weight, still more preferably 0.6 to 6 parts by weight, and most preferably 0.6 to 3.0 parts by weight, based on 100 parts by weight of the urethane resin.

The range of 0.6 parts by weight or more does not inhibit the urethane bond formation, while the range of 10 parts by weight or less maintains an appropriate foaming rate, enabling easy handling.

The flame-retardant urethane composition may further contain an antisettling agent. Examples of antisettling agents include, but are not particularly limited to, carbon black, silica fine powder, hydrogenated castor oil wax, fatty acid amide wax, organic clay, polyethylene oxide, and the like.

The flame-retardant urethane composition may further contain an inorganic filler. Examples of inorganic fillers include, but are not particularly limited to, silica, diatomaceous earth, alumina, titanium oxide, calcium oxide, magnesium oxide, iron oxide, tin oxide, antimony oxide, ferrites, basic magnesium carbonate, calcium carbonate, magnesium carbonate, zinc carbonate, barium carbonate, dawsonite, hydrotalcite, calcium sulfate, barium sulfate, gypsum fiber, calcium silicate and like potassium salts, talc, clay, mica, montmorillonite, bentonite, activated white clay, sepiolite, imogolite, sericite, glass fibers, glass beads, silica balloon, aluminum nitride, boron nitride, silicon nitride, carbon black, graphite, carbon fibers, carbon balloon, charcoal powder, various metal powders, potassium titanate, magnesium sulfate, lead zirconate titanate, aluminum borate, molybdenum sulfide, silicon carbide, stainless steel fibers, various magnetic powders, slag fibers, fly ash, silica alumina fibers, alumina fibers, silica fibers, zirconia fibers, and the like.

The inorganic fillers may be used alone or in a combination of two or more. The inorganic filler is preferably in the form of, in particular, a needle. For example, the inorganic filler has an aspect ratio (a ratio of the smallest thickness (the vertical direction with respect to the longest length) to the longest length of the inorganic filler confirmed with an image that is obtained by observing the inorganic filler with a scanning electron microscope (or a diameter/thickness ratio)) of 5 to 50.

As long as the object of the present invention is achieved, the flame-retardant urethane composition may further optionally contain an antioxidant, based on phenol, amine, sulfur, or the like, a heat stabilizer, a metal deterioration inhibitor, an antistatic agent, a stabilizer, a crosslinking agent, a lubricant, a softening agent, a pigment, a tackifier resin, and like auxiliary components; a polybutene, a petroleum resin and like a tackifier.

Flame-Retardant Urethane Resin Composition and Flame-Retardant Polyurethane Foam

When the above components are mixed, the flame-retardant urethane resin composition is cured by a reaction; thus, its viscosity changes over time. Therefore, the flame-retardant urethane resin composition is separated into two or more portions before use so as to prevent the flame-retardant urethane resin composition from being cured by a reaction. At the time of use of the flame-retardant urethane resin composition, the flame-retardant urethane resin composition that was separated into two or more portions is brought together. In this manner, the flame-retardant urethane resin composition is obtained.

The flame-retardant urethane resin composition may be separated into two or more portions in such a manner that the components of each portion do not start curing independently, and the curing reaction starts after the separated components of the flame-retardant urethane resin composition are mixed together.

The following describes a method for producing the flame-retardant urethane resin composition. The method for producing the flame-retardant urethane resin composition described above is not particularly limited. For example, the flame-retardant urethane resin composition is obtained by the following methods:

a method comprising mixing each component of the flame-retardant urethane resin composition; a method comprising suspending the flame-retardant urethane resin composition in an organic solvent, or heating to melt the flame-retardant urethane resin composition, to obtain a flame-retardant urethane resin composition in the form of a paint; a method comprising preparing, for example, a slurry by dispersing in a solvent; and the like. Further, when the reactive curing resin components contained in the flame-retardant urethane resin composition include a component that is in a solid state at ordinary temperature (25°C), it is also possible to use a method comprising melting the flame-retardant urethane resin composition with heating.

The flame-retardant urethane resin composition may be obtained by mixing and kneading each component of the flame-retardant urethane resin composition using a known apparatus, such as a Banbury mixer, a kneader mixer, a kneading roll, a Raikai mixer, or a planetary stirrer.

Alternatively, the main component of the urethane resin and the curing agent may each be separately mixed and kneaded with a filler etc. in advance, and immediately before being injected, each of the resulting components may be mixed and kneaded by using a static mixer, a dynamic mixer, or the like to obtain the flame-retardant urethane resin composition.

It is also possible to obtain the flame-retardant urethane resin composition by, immediately before being injected, mixing and kneading the catalyst with the components of the flame-retardant urethane resin composition other than the catalyst in a similar manner to the above.

The flame-retardant urethane resin composition is obtained by the methods described above.

The following describes a method for curing the flame-retardant urethane resin composition.

When each of the components of the flame-retardant urethane resin composition are mixed, a reaction starts, and the viscosity increases over time, losing the fluidity. For example, the flame-retardant urethane resin composition may be directly atomized, coated (including brush coated), printed, or sprayed to a pipe, or a pipe may be immersed in the flame-retardant urethane resin composition. Alternatively, the flame-retardant urethane resin composition may be injected into a container, such as a mold or frame. This allows the flame-retardant urethane resin composition to be cured. In this manner, a flame-retardant urethane resin foam comprising the flame-retardant urethane resin composition is obtained, and a foamed polyurethane heat-insulating layer in the shape of a pipe is formed.

The foamed polyurethane heat-insulating layer on a pipe obtained by foam-curing the flame-retardant urethane resin composition is a polyisocyanurate foam and has excellent fire resistance and heat-insulating properties; thus, as being a single layer, both functions are provided. To impart fire resistance and heat-insulating properties to a pipe, a single layer, i.e., the foamed polyurethane heat-insulating layer, is sufficient, making the production of a fire-resistant heat-insulating coating material easy. Further, the foamed polyurethane heat-insulating layer is of a closed-cell type, and thus has an excellent waterproof property and excellent airtightness, as well.

Pipe, Device, and Application Method

The present invention also encompasses a pipe or device coated with a fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers. The present invention also encompasses a pipe or device coated with the fire-resistant heat-insulating coating material for a pipe or device described above.

The present invention also encompasses a method for applying a fire-resistant heat-insulating coating material for a pipe or device, the method comprising coating the outer circumference of a pipe or device with a fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

Fire Resistance Test

The flame-retardant polyurethane foam comprising the flame-retardant urethane resin composition is cut into a piece with a length of 10 cm, a width of 10 cm, and a thickness of 5 cm. In this manner, a sample for a cone calorimeter test is prepared.

Using the sample for a cone calorimeter test, and based on the test method of ISO-5660, a gross calorific value is measured by a cone calorimeter test by heating the sample for 20 minutes at a radiant heat intensity of 50 kW/m$^2$.

Although the present invention has been described with reference to the drawings, the present invention is not limited to the above, and various modifications as described below are possible.

- The shape of the pipe 2 is not limited to generally cylindrical, and the cross section of the pipe may be an ellipse, square, rectangular, polygon, or the like.
- The target to which the fire-resistant heat-insulating coating material 3 is applied is not limited to the pipe 2, and may be any device in general buildings. Further, when the fire-resistant heat-insulating coating material 3 is applied to a device, the application is not limited to be performed to the entire circumference of the device, and may be performed to a part of device so that only a portion that can be visibly observed, i.e., an upper surface or a side surface, is coated.
- Another layer (e.g., a reinforcement material formed of, for example, glass cloth or non-woven fabric) may be provided between the pipe 2 and the fire-resistant heat-insulating coating material 3. It is also possible to provide an additional another layer (e.g., a waterproof and moisture-proof layer formed of rubber or resin) on the fire-resistant heat-insulating coating material 3.
- As shown in Fig. 2, a surface layer 4 may be further provided on the fire-resistant heat-insulating coating material 3. The surface layer 4 is formed of a flame-retardant resin film, such as vinyl chloride, a metal plate, or the like, and further imparts properties, such as fire resistance, to the pipe 2. The surface layer 4 may be disposed around the outer circumference of the fire-resistant heat-insulating coating material 3 by using a hitherto known method.

The present invention is described below in more detail with reference to Examples. However, the present invention is not limited to these Examples.

Examples

Example 1

Test for Evaluating Flame-Retardant Polyurethane Foam

Following the formulations shown in Table 1, the components of each of the flame-retardant urethane resin compositions of Examples 1 to 19 were separated into three portions, i.e., (1) a polyol composition, (2) a polyisocyanate, and (3) additives. The following are the details of each component in the table (the proportion of each component is shown by parts by weight based on 100 parts by weight of the polyisocyanurate resin). Following the formulations shown in Table 2, the components of the flame-retardant urethane resin compositions of Comparative Examples 1 to 14 were also prepared in a similar manner.

(1) Polyol Composition

- Polyol Compound

  (A-1) p-phthalic acid polyester polyol (produced by Kawasaki Kasei Chemicals Ltd., product name: Maximol RFK-505, hydroxyl value = 250 mg KOH/g)

- Foam Stabilizer
Polyalkylene glycol-based foam stabilizer (produced by Dow Corning Toray Co., Ltd., product name: SH-193)
- Trimerization Catalyst

  (B-1) potassium octylate (produced by Tokyo Chemical Industry Co., Ltd., product code: P0048)

(B-2) trimerization catalyst (produced by Tosoh Corporation, product name: TOYOCAT-TR20)

- Urethanization Catalyst
  Pentamethyldiethylenetriamine (produced by Tosoh Corporation, product name: TOYOCAT-DT)
- Foaming Agent

  Water

  HFC

  HFC-365mfc (1,1,1,3,3-pentafluorobutane, produced by Solvay Japan, Ltd.) and HFC-245fa (1,1,1,3,3-pentafluoropropane, produced by Central Glass Co., Ltd.), mixed ratio: HFC-365mfc:HFC-245fa = 7:3, hereinafter referred to as "HFC"

  HFO

  SOLSTICE LBA (trans-1-chloro-3,3,3-trifluoropropene, produced by Honeywell Japan Inc., hereinafter referred to as "HFO")

(2) Polyisocyanate
MDI (produced by Tosoh Corporation, product name: Millionate MR-200), viscosity: 167 mPa·s
(3) Additives

  (C-1) red phosphorus (produced by Rin Kagaku Kogyo Co., Ltd., product name: Nova Excel 140)
  (C-2) ammonium dihydrogen phosphate (produced by Taihei Chemical Industrial Co., Ltd.)
  (C-3) tris(β-chloropropyl) phosphate (produced by Daihachi Chemical Industry Co., Ltd., product name: TMCPP, hereinafter referred to as "TMCPP")
  (C-4) tricresyl phosphate (produced by Daihachi Chemical Industry Co., Ltd., product name: TCP, hereinafter referred to as "TCP")
  (C-5) Cresyl diphenyl phosphate (produced by Daihachi Chemical Industry Co., Ltd., product name: CDP, hereinafter referred to as "CDP")
  (C-6) hexabromobenzene (produced by Manac Incorporated, product name: HBB-b, hereinafter referred to as "HBB")
  (C-7) zinc borate (produced by Hayakawa & Co., Ltd., product name: Firebrake ZB)
  (C-8) antimony trioxide (produced by Nihon Seiko Co., Ltd., product name: Patox C)
  (C-9) aluminum hydroxide (produced by Almorix Ltd., product name: B-325)
  (C-10) needle-shaped filler (produced by Kinsei Matec Co. Ltd., wollastonite, product name: SH1250)

Following the formulations shown in Tables 1 and 2, (1) the components of a polyol composition and (3) the components of additives were weighed into a 1000-mL polypropylene beaker, and the mixture was stirred at 25°C at 500 rpm for 1 minute using a general-purpose stirrer (produced by HEIDON, product name: BL1200). (2) The component of polyisocyanate was added to the kneaded material obtained after stirring (1) the components of a polyol composition and (3) the components of additives, and the mixture was stirred at 1000 rpm for about 10 seconds using the above general-purpose stirrer. In this manner, a foam was produced. The obtained flame-retardant urethane resin composition lost the fluidity with the progress of time, thereby obtaining a flame-retardant urethane resin foam. The foam was evaluated according to the following criteria. Tables 1 and 2 show the results.

Measurement of Calorific Value

The cured product was cut to a size of 10 cm x 10 cm x 5 cm to obtain a sample for a cone calorimeter test, and based on ISO-5660, the maximum heat release rate and the gross calorific value were measured with heating at a radiant heat intensity of 50 kW/m$^2$ for 10 minutes or 20 minutes. Tables 1 and 2 show the results.
This measuring method is specified by the General Building Research Corporation of Japan, which is a public institution stipulated in Article 108 (2) of the Enforcement Ordinance of Building Standards Act, as a test method that corresponds to the standard of a cone calorimeter method. The measuring method is based on the test method of ISO-5660.
When the gross calorific value measured using a cone calorimeter under heating for 20 minutes is 8 MJ/m$^2$ or less, it is evaluated as "pass." In this test, "A" was given when the gross calorific value measured under heating for 20 minutes was 8 MJ or less, "B" was given when the gross calorific value measured under heating for 10 minutes was 8 MJ or less, and "C" was given when the gross calorific value measured under heating for 10 minutes exceeded 8 MJ/m$^2$.

Measurement of Expansion

In the test of ISO-5660, when the molded article after heating came into contact with the igniter, "Poor" was given, and when it did not come into contact, "Good" was given, as shown in Tables 1 and 2.

Measurement of Deformation (Cracking)

In the test of ISO-5660, when a deformation reached the back of the test sample, "Poor" was given, and when no deformation was observed at the back of the test sample, "Good" was given, as shown in Tables 1 and 2.

Measurement of Shrinkage

In the test of ISO-5660, when a deformation of 1 cm or more in the width direction and 5 mm or more in the thickness direction of the test sample was observed, "Poor" was given, and when no deformation was observed, "Good" was given, as shown in Tables 1 and 2.

When the results of the measurement of calorific value, expansion, deformation, and shrinkage were all "Good," the sample was determined as to be acceptable ("Yes"); otherwise, the sample was determined as not acceptable ("No").

Measurement of Heat Conductivity

The cured product was cut to a size of 20 cm x 20 cm x 5 cm to obtain a sample for heat conductivity, and the heat conductivity was measured based on JIS A 1412-2, with an upper plate at 37.5°C and a lower plate at 12.5°C with a temperature difference of 25°C at an average temperature of 25°C. Tables 1 and 2 show the measurement results. A thermal conductivity tester HC-074 (produced by EKO Instruments Co., Ltd.) was used as a measurement device.

Table 1

| | | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|
| Polyol composition | | Polyol compound | A-1 | 21.8 | 21.8 | 21.8 | 21.8 | 21.8 | 21.8 | 21.8 | 21.8 | 21.8 | 21.8 |
| | | Foam stabilizer | | 1.7 | 1.7 | 1.7 | 1.7 | 1.7 | 1.7 | 1.7 | 1.7 | 1.7 | 1.7 |
| | | Trimerization catalyst | B-1 | 0.5 | 0.5 | 0.5 | 0.5 | 0.5 | 0.5 | 0.5 | 0.5 | 0.5 | 0.5 |
| | | | B-2 | 0.7 | 0.7 | 0.7 | 0.7 | 0.7 | 0.7 | 0.7 | 0.7 | 0.7 | 0.7 |
| | | Urethanization catalyst | | 0.1 | 0.1 | 0.1 | 0.1 | 0.1 | 0.1 | 0.1 | 0.1 | 0.1 | 0.1 |
| | | Foaming agent | Water | 0.6 | 0.6 | 0.6 | 0.6 | 0.6 | 0.6 | 0.6 | 0.6 | 0.6 | 0.6 |
| | | | HFC | 3.9 | 3.9 | 3.9 | 3.9 | 3.9 | 3.9 | 3.9 | 3.9 | 3.9 | 3.9 |
| | | | HFO | | | | | | | | | | |
| | Polyisocyanate | | | 78.2 | 78.2 | 78.2 | 78.2 | 78.2 | 78.2 | 78.2 | 78.2 | 78.2 | 78.2 |
| Additives | | Red phosphorus | C-1 | 6.0 | 6.0 | 6.0 | 6.0 | 6.0 | 6.0 | 6.0 | 6.0 | 6.0 | 6.0 |
| | | Ammonium dihydrogen phosphate | C-2 | | 3.0 | | | | | | | | |
| | | TMCPP | C-3 | 7.0 | 7.0 | 7.0 | 7.0 | 7.0 | | | | | |
| | | TCP | C-4 | | | | | | 7.0 | | | | |
| | | CDP | C-5 | | | | | | | 7.0 | | | |
| | | HBB | C-6 | | 3.0 | 3.0 | 3.0 | | | | 3.0 | | |
| | | Zinc borate | C-7 | | | | 3.0 | | | | | 3.0 | |
| | | Antimony trioxide | C-8 | | | 3.0 | | | | | | | 3.0 |
| | | Aluminum hydroxide | C-9 | | | | | | | | | | |
| | | Needle-shaped filler | C-10 | 6.0 | | | | | | | | | |
| Density (g/cm$^3$) | | | | 0.055 | 0.052 | 0.054 | 0.055 | 0.052 | 0.052 | 0.053 | 0.056 | 0.056 | 0.056 |
| Isocyanate index | | | | 365 | 365 | 365 | 365 | 365 | 365 | 365 | 365 | 365 | 365 |
| Gross calorific value (MJ/m$^2$): after 10 min. | | | | 1.3 | 2.0 | 3.3 | 4.2 | 3.3 | 5.7 | 6.4 | 4.6 | 6.8 | 7.2 |
| Gross calorific value (MJ/m$^2$): after 20 min. | | | | 2.2 | 4.2 | 5.2 | 5.7 | 5.2 | 8.1 | 9.5 | 6.2 | 9.5 | 10.1 |
| Gross calorific value | | | | A | A | A | A | A | B | B | A | B | B |
| Residue state | | Expansion | | Good | Good | Good | Good | Good | Good | Good | Good | Good | Good |
| | | Deformation | | Good | Good | Good | Good | Good | Good | Good | Good | Good | Good |
| | | Shrinkage | | Good | Good | Good | Good | Good | Good | Good | Good | Good | Good |
| Result | | | | Yes | Yes | Yes | Yes | Yes | Yes | Yes | Yes | Yes | Yes |
| Heat conductivity (W/m ·k) | | | | 0.025 | 0.024 | 0.026 | 0.025 | 0.023 | 0.023 | 0.023 | 0.024 | 0.024 | 0.025 |

Table 1 (continued)

| | | | Ex. 11 | Ex. 12 | Ex. 13 | Ex. 14 | Ex. 15 | Ex. 16 | Ex. 17 | Ex. 18 | Ex. 19 |
|---|---|---|---|---|---|---|---|---|---|---|---|
| Polyol composition | Polyol compound | A-1 | 21.8 | 21.8 | 21.8 | 21.8 | 21.8 | 21.8 | 37.9 | 10.8 | 21.8 |
| | Foam stabilizer | | 1.7 | 1.7 | 1.7 | 1.7 | 1.7 | 1.7 | 1.7 | 1.7 | 1.7 |
| | Trimerization catalyst | B-1 | 0.5 | 0.5 | 0.5 | 0.5 | 0.5 | 0.5 | 0.5 | 0.5 | 0.5 |
| | | B-2 | 0.7 | 0.7 | 0.7 | 0.7 | 0.7 | 0.7 | 0.7 | 0.7 | 0.7 |
| | Urethanization catalyst | | 0.1 | 0.1 | 0.1 | 0.1 | 0.1 | 0.1 | 0.1 | 0.1 | 0.1 |
| | Foaming agent | Water | 0.6 | 0.6 | 0.6 | 0.6 | 0.6 | 0.6 | 0.6 | 0.6 | 0.6 |
| | | HFC | 3.9 | 3.9 | 3.9 | 3.9 | 3.9 | 3.9 | 3.9 | 3.9 | |
| | | HFO | | | | | | | | | 3.9 |
| Polyisocyanate | | | 78.2 | 78.2 | 78.2 | 78.2 | 78.2 | 78.2 | 62.1 | 89.2 | 78.2 |
| Additives | Red phosphorus | C-1 | 6.0 | 6.0 | 3.0 | 3.0 | 15.0 | 15.0 | 6.0 | 6.0 | 6.0 |
| | Ammonium dihydrogen phosphate | C-2 | | | | 1.5 | | | | | |
| | TMCPP | C-3 | | | | | | 15.0 | 7.0 | 7.0 | 7.0 |
| | TCP | C-4 | | | | | | | | | |
| | CDP | C-5 | | | | | | | | | |
| | HBB | C-6 | | | | | | | | | |
| | Zinc borate | C-7 | | | | | | | | | |
| | Antimony trioxide | C-8 | | | | | | | | | |
| | Aluminum hydroxide | C-9 | 3.0 | | | | | | | | |
| | Needle-shaped filler | C-10 | | 6.0 | 1.5 | | 15.0 | | 6.0 | 6.0 | 6.0 |
| Density (g/cm$^3$) | | | 0.055 | 0.055 | 0.055 | 0.055 | 0.055 | 0.055 | 0.052 | 0.052 | 0.052 |
| Isocyanate index | | | 365 | 365 | 365 | 365 | 365 | 365 | 200 | 600 | 365 |
| Gross calorific value (MJ/m$^2$): after 10 min. | | | 5.5 | 2.8 | 7.3 | 7.5 | 2.2 | 3.4 | 3.8 | 4.7 | 1.8 |
| Gross calorific value (MJ/m$^2$): after 20 min. | | | 6.6 | 4.2 | 9.2 | 10.2 | 4.5 | 5.2 | 5.5 | 7.1 | 3.6 |
| Gross calorific value | | | A | A | B | B | A | A | A | A | A |
| Residue state | Expansion | | Good | Good | Good | Good | Good | Good | Good | Good | Good |
| | Deformation | | Good | Good | Good | Good | Good | Good | Good | Good | Good |
| | Shrinkage | | Good | Good | Good | Good | Good | Good | Good | Good | Good |
| Result | | | Yes | Yes | Yes | Yes | Yes | Yes | Yes | Yes | Yes |
| Heat conductivity (W/m ·k) | | | 0.024 | 0.025 | 0.024 | 0.023 | 0.027 | 0.026 | 0.025 | 0.024 | 0.024 |

16

Table 2

| | | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|
| Polyol composition | | Polyol compound | A-1 | 21.8 | 21.8 | 21.8 | 21.8 | 21.8 | 21.8 | 21.8 | 21.8 |
| | | Foam stabilizer | | | 1.7 | 1.7 | | 1.7 | 1.7 | 1.7 | 1.7 | 1.7 |
| | | Trimerization catalyst | B-1 | 0.5 | | 0.5 | 0.5 | 0.5 | 0.5 | 0.5 | 0.5 |
| | | | B-2 | 0.7 | | 0.7 | 0.7 | 0.7 | 0.7 | 0.7 | 0.7 |
| | | Urethanization catalyst | | 0.1 | 0.1 | 0.1 | 0.1 | 0.1 | 0.1 | 0.1 | 0.1 |
| | | Foaming agent | Water | 0.6 | 0.6 | 0.6 | 0.6 | 0.6 | 0.6 | 0.6 | 0.6 |
| | | | HFC | 3.9 | 3.9 | 3.9 | 3.9 | 3.9 | 3.9 | 3.9 | 3.9 |
| | Polyisocyanate | | | 78.2 | 78.2 | 78.2 | 78.2 | 78.2 | 78.2 | 78.2 | 78.2 |
| Additives | | Red phosphorus | C-1 | | 6.0 | 6.0 | 6.0 | | | | |
| | | Ammonium dihydrogen phosphate | C-2 | | | | | 3.0 | | | |
| | | TMCPP | C-3 | | 7.0 | 7.0 | | | 3.0 | | |
| | | TCP | C-4 | | | | | | | 3.0 | |
| | | CDP | C-5 | | | | | | | | 3.0 |
| | | HBB | C-6 | | | | | | | | |
| | | Zinc borate | C-7 | | | | | | | | |
| | | Antimony trioxide | C-8 | | | | | | | | |
| | | Aluminum hydroxide | C-9 | | | | | | | | |
| | | Needle-shaped filler | C-10 | | 6.0 | 6.0 | | | | | |
| Density (g/cm$^3$) | | | | 0.053 | 0.053 | Curing defects | 0.053 | 0.053 | 0.053 | 0.053 | 0.053 |
| Isocyanate index | | | | 365 | 365 | 365 | 365 | 365 | 365 | 365 | 365 |
| Gross calorific value (MJ/m$^2$): after 10 min. | | | | 45.2 | 12.4 | Unmeasurable | 7.8 | 20.5 | 15.5 | 21.1 | 18.3 |
| Gross calorific value (MJ/m2): after 20 min. | | | | 55.2 | 16.3 | | 11.2 | 31.4 | 18.2 | 28.5 | 22.4 |
| Gross calorific value | | | | C | C | | B | C | C | C | C |
| Residue state | | Expansion | | Poor | Poor | | Poor | Poor | Poor | Poor | Poor |
| | | Deformation | | Poor | Poor | | Poor | Poor | Poor | Poor | Poor |
| | | Shrinkage | | Poor | Poor | | Poor | Poor | Poor | Poor | Poor |
| Result | | | | No | No | No | No | No | No | No | No |
| Heat conductivity (W/m ·k) | | | | 0.023 | 0.023 | Unmeasurable | 0.023 | 0.023 | 0.023 | 0.023 | 0.023 |

Table 2 (continued)

| | | | Comp. Ex. 9 | Comp. Ex. 10 | Comp. Ex. 11 | Comp. Ex. 12 | Comp. Ex. 13 | Comp. Ex. 14 | Comp. Ex. 15 |
|---|---|---|---|---|---|---|---|---|---|
| Polyol composition | Polyol compound | A-1 | 21.8 | 21.8 | 21.8 | 21.8 | 21.8 | 21.8 | 21.8 |
| | Foam stabilizer | | 1.7 | 1.7 | 1.7 | 1.7 | 1.7 | 1.7 | 1.7 |
| | Trimerization catalyst | B-1 | 0.5 | 0.5 | 0.5 | 0.5 | 0.5 | 0.5 | 0.5 |
| | | B-2 | 0.7 | 0.7 | 0.7 | 0.7 | 0.7 | 0.7 | 0.7 |
| | Urethanization catalyst | | 0.1 | 0.1 | 0.1 | 0.1 | 0.1 | 0.1 | 0.1 |
| | Foaming agent | Water | 0.6 | 0.6 | 0.6 | 0.6 | 0.6 | 0.6 | 0.6 |
| | | HFC | 3.9 | 3.9 | 3.9 | 3.9 | 3.9 | 3.9 | 3.9 |
| Polyisocyanate | | | 78.2 | 78.2 | 78.2 | 78.2 | 78.2 | 78.2 | 78.2 |
| Additives | Red phosphorus | C-1 | | | | | | 2.0 | 6.0 |
| | Ammonium dihydrogen phosphate | C-2 | | | | | | | |
| | TMCPP | C-3 | | | | | | | |
| | TCP | C-4 | | | | | | | |
| | CDP | C-5 | | | | | | | |
| | HBB | C-6 | 3.0 | | | | | | |
| | Zinc borate | C-7 | | 3.0 | | | | | |
| | Antimony trioxide | C-8 | | | 3.0 | | | | |
| | Aluminum hydroxide | C-9 | | | | 3.0 | | | |
| | Needle-shaped filler | C-10 | | | | | 6.0 | 6.0 | 1.0 |
| Density (g/cm$^3$) | | | 0.053 | 0.053 | 0.053 | 0.053 | 0.053 | 0.053 | 0.053 |
| Isocyanate index | | | 365 | 365 | 365 | 365 | 365 | 365 | 365 |
| Gross calorific value (MJ/m$^2$): after 10 min. | | | 16.5 | 32.1 | 36.9 | 23.2 | 22.1 | 11.3 | 6.5 |
| Gross calorific value (MJ/m2): after 20 min. | | | 20.1 | 40.6 | 44.4 | 31.2 | 29.2 | 15.2 | 8.3 |
| Gross calorific value | | | C | C | C | C | C | C | B |
| Residue state | Expansion | | Poor | Poor | Poor | Poor | Poor | Poor | Poor |
| | Deformation | | Poor | Poor | Poor | Poor | Poor | Poor | Poor |
| | Shrinkage | | Poor | Poor | Poor | Poor | Poor | Poor | Poor |
| Result | | | No | No | No | No | No | No | No |
| Heat conductivity (W/m·k) | | | 0.023 | 0.023 | 0.023 | 0.023 | 0.023 | 0.023 | 0.023 |

**Claims**

1.  A fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

2.  The fire-resistant heat-insulating coating material for a pipe or device according to claim 1, wherein the flame-retardant urethane composition contains, based on 100 parts by weight of the polyurethane resin composition comprising the polyisocyanate and the polyol,
    the trimerization catalyst in an amount within a range of 0.1 to 10 parts by weight,
    the foaming agent in an amount within a range of 0.1 to 30 parts by weight,
    the foam stabilizer in an amount within a range of 0.1 to 10 parts by weight, and
    the additives in an amount within a range of 4.5 to 70 parts by weight, and
    wherein the additives comprise red phosphorus in an amount within a range of 3 to 18 parts by weight and at least one additive other than red phosphorus in an amount within a range of 1.5 to 52 parts by weight.

3.  A pipe or device coated with the fire-resistant heat-insulating coating material for a pipe or device of claim 1 or 2.

4.  A method for applying a fire-resistant heat-insulating coating material for a pipe or device, the method comprising coating the outer circumference of a pipe or device with a fire-resistant heat-insulating coating material for a pipe or device, the coating material comprising a foamed polyurethane heat-insulating layer comprising a flame-retardant urethane composition containing a polyisocyanate, a polyol, a trimerization catalyst, a foaming agent, a foam stabilizer, and additives, the additives comprising red phosphorus and at least one member selected from the group consisting of phosphoric acid esters, phosphate-containing flame retardants, bromine-containing flame retardants, borate-containing flame retardants, antimony-containing flame retardants, metal hydroxides, and needle-shaped fillers.

Fig. 1

Fig. 2

## INTERNATIONAL SEARCH REPORT

| | International application No. |
|---|---|
| | PCT/JP2015/055766 |

**A.   CLASSIFICATION OF SUBJECT MATTER**
*F16L59/147*(2006.01)i, *C08G18/00*(2006.01)i, *C08G18/16*(2006.01)i, *C09K21/02*
(2006.01)i, *C09K21/04*(2006.01)i, *C09K21/08*(2006.01)i, *C09K21/12*(2006.01)i,
*F16L11/12*(2006.01)i, *C08G101/00*(2006.01)n

According to International Patent Classification (IPC) or to both national classification and IPC

**B.   FIELDS SEARCHED**

Minimum documentation searched (classification system followed by classification symbols)
F16L59/147, C08G18/00, C08G18/16, C09K21/02, C09K21/04, C09K21/08,
C09K21/12, F16L11/12, C08G101/00

Documentation searched other than minimum documentation to the extent that such documents are included in the fields searched
Jitsuyo Shinan Koho            1922–1996   Jitsuyo Shinan Toroku Koho    1996–2015
Kokai Jitsuyo Shinan Koho    1971–2015   Toroku Jitsuyo Shinan Koho    1994–2015

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | JP 2013-67796 A  (Evonik Goldschmidt GmbH), 18 April 2013 (18.04.2013), claim 14; paragraphs [0038] to [0047] & US 2013/0068990 A1    & EP 2573131 A1 & DE 102011083011 A    & CN 103013092 A & KR 10-2013-0031218 A | 1-4 |
| Y | US 6268402 B1  (Joe C.Wilson), 31 July 2001 (31.07.2001), column 4, lines 34 to 41; column 15, lines 9 to 31; column 19, line 53 to column 20, line 37 (Family: none) | 1,4 |
| Y | JP 2009-97570 A  (Sekisui Chemical Co., Ltd.), 07 May 2009 (07.05.2009), paragraphs [0013] to [0015] (Family: none) | 1-4 |

| ☒   Further documents are listed in the continuation of Box C. | ☐   See patent family annex. |
|---|---|

\*      Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 27 April 2015 (27.04.15) | 12 May 2015 (12.05.15) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (July 2009)

**INTERNATIONAL SEARCH REPORT**

| International application No. |
| --- |
| PCT/JP2015/055766 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2002-168393 A  (Nichias Corp.),<br>14 June 2002 (14.06.2002),<br>paragraph [0033]<br>(Family: none) | 1-4 |
| Y | JP 2012-97169 A  (Howakasei Corp.),<br>24 May 2012 (24.05.2012),<br>paragraphs [0007] to [0008], [0012], [0032]<br>(Family: none) | 2-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014036905 A
- JP 4457305 B

- JP 2008074880 A